# EUROPEAN PATENT APPLICATION

(11) **EP 3 422 463 A1**
(43) Date of publication of application: **02.01.2019**
(21) Application number: 17177829.3
(22) Date of filing: 26.06.2017
(51) Int. Cl.: H01M 10/36, H01G 11/54

(54) **AQUEOUS POLYMER ELECTROLYTE**

(71) Applicant: Westfälische Wilhelms-Universität Münster, 48149 Münster (DE); Forschungszentrum Jülich GmbH, 52428 Jülich (DE)
(72) Inventor: HE, Xin, 48161 Münster (DE); LI, Jie, 48161 Münster (DE); YAN, Bo, 48161 Münster (DE); WINTER, Martin, 48149 Münster (DE); PAILLARD, Eli, 48161 Münster (DE)
(74) Representative: Michalski Hüttermann & Partner Patentanwälte mbB

(57) **Abstract**

The present invention relates to an aqueous polymer electrolyte comprising:
a) water in a range of ≥ 5 wt% to ≤ 95 wt%,
b) a metal ion component comprising a metal cation selected from the group consisting of Li⁺, Na⁺, K⁺, Mg²⁺, Al³⁺, Ca²⁺, Fe²⁺, Fe³⁺ and Zn²⁺, and
c) a polymer component comprising repeat units according to the following formula

(I) : -[C(X¹)(X²)-C(Y¹)(Y²)-Z]-

wherein:
X¹, X²
are selected, the same or independently from the other, from the group consisting of -H, -OH, -CH₃, -NH₂, -CH₂OH and -C₆H₉(OH)₂;
Y¹, Y²
are selected, the same or independently from the other, from the group consisting of -H, -CH₃, -NC₄H₆O, -CONH₂, -COOH, -COO-, C₆H₁₀SO₂O- and -C₆H₁₀SO₂OH;
Z
is an optional element selected from the group consisting of -O-, -CH₂-, -CO-and methyl cellulose;
wherein the metal ion component and the polymer component together amount to a content range of ≥ 5 wt% to ≤ 95 wt%, all wt% referring to a total amount of the aqueous polymer electrolyte of 100 wt%.

## Description

The present invention relates to the technical field of lithium ion-batteries, and particularly relates to aqueous electrolyte systems.

Among the many energy storage devices, lithium ion batteries (LIBs) are now commonly used in portable consumer electronics due to their advantages in terms of high energy density and long cycle life. Other technologies, based on either metal anodes, insertion or conversion electrodes, using other electropositive metals ions such as Al³⁺, K⁺, Mg²⁺ Ca²⁺, Fe²⁺, Fe³⁺ and Zn²⁺ are also under developments for secondary (rechargeable) batteries or even at a mature stage for primary batteries. However, the implementation of high voltage batteries requires, in most cases, the use of organic electrolytes. Unfortunately, organic electrolytes are made of flammable and toxic solvents which cause helth and environmental hazard and, in the case of lithium ion batteries, also incorporate toxic lithium salts, such as lithium hexafluorophosphate (LiPF₆), which generates hydrofluoric acid upon hydrolysis. Thus, replacing organic electrolytes by aqueous electrolytessolve the flammability issue and decrease the toxicity of the electrolytes and, at the same time, reduce the cost of the electrolyte.

The electrochemical stability window of aqueous electrolytes of 1.23V limits the choice of the electrochemical couples which are utilized in LIBs and sodium-ion batteries (NIBs) for instance. A maximum voltage of 3.0 V was achieved for LIBs using highly concentrated aqueous electrolytes, as described by L. Suo et al. in Science 2015, 350, 938-943. The electrolyte was obtained by dissolving lithium bis(trifluoromethane sulfonyl)imide (LiTFSI) at a concentration of 21 M in water. However, the acute toxicity and high price are obvious drawbacks of LiTFSI, and large scale applications of such highly concentrated aqueous electrolytes, where water represents less than 20% weight fraction of the total electrolyte, are still restricted.

On the other hand, WO 2015/140298 discloses solid phase electrolytes containing a conducting salt and a random copolymer, but does not disclose any aqueous electrolyte system.

There is an ongoing demand for environmentally friendly electrolytes for aqueous rechargeable batteries, having a wider electrochemical stability window and being producible at low costs.

Therefore, the object underlying the present invention was to provide an electrolyte usable in aqueous rechargeable batteries.

The problem is solved by an aqueous polymer electrolyte comprising:
a) water in a range of ≥ 5 wt% to ≤ 95 wt%,
b) a metal ion component comprising a metal cation selected from the group consisting of Li⁺, Na⁺, K⁺, Mg²⁺, Al³⁺, Ca²⁺, Fe²⁺, Fe³⁺ and Zn²⁺, and
c) a polymer component comprising repeat units according to the following formula (I) : -[C(X¹)(X²)-C(Y¹)(Y²)-Z]- wherein:
   - X¹, X²: are selected, the same or independently from the other, from the group consisting of -H, -OH, -CH₃, -NH₂, -CH₂OH and -C₆H₉(OH)₂;
   - Y¹, Y²: are selected, the same or independently from the other, from the group consisting of -H, -CH₃, -NC₄H₆O, -CONH₂, -COOH, -COO-, C₆H₁₀SO₂O- and -C₆H₁₀SO₂OH;
   - Z: is an optional element selected from the group consisting of -O-, -CH₂-, -CO- and methyl cellulose;
   wherein the metal ion component and the polymer component together amount to a content range of ≥ 5 wt% to ≤ 95 wt%, all wt% referring to a total amount of the aqueous polymer electrolyte of 100 wt%.

It has been surprisingly found that an aqueous electrolyte system provides a considerable widening of the electrochemical stability window of aqueous electrolyte systems up to high water contents. It could be shown that the polymer components which are employed as a base for the aqueous electrolyte can limit the decomposition of water molecules on the surface of the electrodes and the resulting hydrogen or oxygen evolution. On the other hand, the mobility of lithium ions is high in the electrolyte system, and the diffusion rate of lithium ions as well as the rate capability of electrochemical cells is significantly increased compared to cells using non-aqueous electrolytes. Furthermore, the polymer electrolytes can be manufactured at low cost and are environmentally friendly. In some embodiments, aqueous electrolytes can be provided for environmentally friendly lithium-ion battery systems. These properties enable an advanced and promising practical applicability of aqueous batteries, electrochemical double layer capacitor, also known as supercapacitors, and hybrids between these such as lithium ion capacitors.

As used herein, the term "polymer component" means any polymer comprising the respective repeat units or its copolymers. The term "repeat units" refers to component units having the same chemical structure.

As used herein, the term "metal ion component" includes a compound comprising the respective metal cations or to the metal cation alone. The metal ion component may be an organic or inorganic salt of the respective metal cation. The metal ion component alternatively may refer to the presence of the metal cation itself, for example in embodiments of a negatively charged polymer providing the anionic counterpart.

The polymer component and the metal ion component may form admixtures, such as one polymer repeat unit mixed with one or more metal ion components, for example in a region where water molecules interact with both components via its oxygen atoms or via hydrogen bonds, or may form a complex of one or more compounds of each sort, such as two single charged repeat unit complexing a twofold positively charged metal cation. Or the polymer component and the metal ion component may form a polymer salt for example comprising a one-fold positively charged metal cation as counter ion for each one-fold negatively charged repeat unit.

A polymer comprising negatively charged repeat units and a metal ion component consisting of metal cations may form a polymer salt, wherein the metal cation provides the counter compound for anionic repeat units. In embodiments where the polymer component comprises repeat units not providing a negative charge, the metal ion component preferably is provided as a salt comprising the metal cation and also its counter anion. The counter anion may be an organic sulfonimide, sulfonate, imidazolate, dicyanamide (DCA) or oxalatoborate anion, for example, 4,5-dicyano-2-(trifluoromethyl)imidazolate (TDI), bis (perfluoro-ethylsulfonyl) imide (BETI) or bis(trifluoromethanesulfonyl)imide (TFSI). Alternatively the counter anion may be an inorganic anion.

In embodiments where the polymer component comprises repeat units having negatively charged functionalities, metal cations such as Li⁺ or Na⁺ may form a polymer salt coordinating to -COO- or -C₆H₁₀SO₂O⁻ groups. In other embodiments, di- or trivalent cations such as Mg²⁺ or Ca²⁺ may be coordinated by a respective number of repeat units or polymers. The aqueous polymer electrolyte thus can comprise a metal ion component and a polymer component, which may form a polymer salt, for example a lithium polyacrylate polymer having groups -COO⁺Li⁻, or a polymer salt wherein two or three polymers or repeat units coordinate di- or trivalent cations, or the metal ion component and the polymer component form an adduct, for example an LiTFSI polyacrylamide adduct.

The aqueous polymer electrolyte may comprise cations usually used in electrolyte systems selected from Li⁺, Na⁺, K⁺, Mg²⁺, Al³⁺, Ca²⁺, Fe²⁺, Fe³⁺ and Zn²⁺. The metal ion component provides the conducting ion of the electrolyte. In preferred embodiments, the metal cation is Li⁺ or Na⁺. Advantageously, the mobility of lithium ions is faster in aqueous electrolyte systems compared to non-aqueous electrolytes.

In embodiments, the metal ion component may be Li⁺, Na⁺, K⁺, Mg²⁺, Al³⁺, Ca²⁺, Fe²⁺, Fe³⁺ or Zn²⁺. In other embodiments, the metal ion component may be selected from the group consisting of LiNO₃, Li₂SO₄, LiCl, LiClO₄, LiOH, LiCF₃SO₃, LiTDI, LiDCA, LiBETI, LiFSI (lithium bis(fluorosulfonyl)imide), LiTFSI (lithium bis(trifluoromethanesulfonyl)imide), NaNO₃, Na₂SO₄, NaCl, NaClO₄ NaFSI, NaTFSI, NaOH, KNO₃, K₂SO₄, KCl, KClO₄, KOH, Mg(NO₃)₂, MgSO₄, MgCl₂, Ca(NO₃)₂, CaSO₄, CaCl₂, Fe(NO₃)₂, FeSO₄, FeCl₂, AlCl₃ Al(NO₃)₃, Al₂(SO₄)₃, FeCl₃, Fe(NO₃)₃ and Fe₂(SO₄)₃, particularly from LiFSI, LiTFSI, NaFSI and NaTFSI.

The polymer components can be partially or totally neutralized, lightly or highly cross-linked, and can be adjusted for specific battery system. The substituents X and Y can be chosen accordingly. Preferred polymer components are polyacrylate and polyacrylamide polymers and copolymers. Particularly, polyacrylate and polyacrylamide homopolymers and copolymers have been found usable in aqueous electrolyte electrolytes. In water or aqueous solvent, the polymer component advantageously gels to a gel or gel-like viscous liquid. Preferred repeat units are acrylic acid or acrylate and acrylamide units, wherein X¹, X² are hydrogen and Y¹, Y² are hydrogen and a carboxyl group or a carboxamide group, respectively. Preferred repeat units are selected from -[CH₂CHCOO-]- and/or - [CH₂CHCOOH]- and -[CH₂CHCONH₂]- and mixtures thereof.

Polyacrylic acid (PAA) is cheap, commercially widespread, relatively non-toxic, and thus used in various applications. In embodiments where the polymer compound is a polyacrylate, the metal ion component preferably is a metal cation such as Li⁺ or Na⁺. In these embodiments, the metal cation and the polymer comprising anionic repeat units can form a polymer salt.

In embodiments, the polymer component and the metal ion component form a polymer salt comprising repeat units -[CH₂CHCOOLi]- or -[CH₂CHCOONa]-. The polymer salts may comprise in a range of ≥ 2 to ≤ 50,000 repeat units, preferably in the range of ≥ 10 to ≤ 40,000 repeat units, more preferably in the range of ≥ 20 to ≤ 4,000 repeat units. The polymer salt may provide a strong salt character which is most advantageously for aqueous electrolyte systems. In preferred embodiments, the polymer component and the metal ion component form a polymer salt comprising repeat units -[CH₂CHCOOLi]-. Particularly lithium polymer electrolytes showed conductivities that were comparable to standard non-aqueous electrolyte systems. Particularly, lithium or sodium polyacrylate polymers thus provide a beneficial aqueous electrolyte system for secondary batteries.

In further preferred embodiments, the polymer comprises repeat units -[CH₂CHCONH₂]-. The polymer may comprise in the range of ≥ 2 to ≤ 50,000 repeat units, preferably in the range of ≥ 10 to ≤ 40,000 repeat units, more preferably in the range of ≥ 20 to ≤ 4,000 repeat units. In embodiments where the polymer compound is a polyacrylamide polymer, the metal ion component preferably is a metal salt selected from the group of LiNO₃, Li₂SO₄, LiCl, LiClO₄, LiOH, LiCF₃SO₃, LiTDI, LiDCA, LiBETI, LiFSI (lithium bis(fluorosulfonyl)imide), LiTFSI (lithium bis(trifluoromethanesulfonyl)imide), NaNO₃, Na₂SO₄, NaCl, NaClO₄ NaFSI, NaTFSI, NaOH, KNO₃, K₂SO₄, KCl, KClO₄, KOH, Mg(NO₃)₂, MgSO₄, MgCl₂, Ca(NO₃)₂, CaSO₄, CaCl₂, Fe(NO₃)₂, FeSO₄, FeCl₂, AlCl₃ Al(NO₃)₃, Al₂(SO₄)₃, FeCl₃, Fe(NO₃)₃ and Fe₂(SO₄)₃, and particularly is selected from LiFSI and LiTFSI. In these embodiments, adducts of the polymer and the organic salts can be formed.

It is assumed that the oxygen atom attracts the hydrogen's electrons in water, especially the electronegative oxygen atom such as oxygen in -[CH₂CHCOOLi]- and the electronegative nitrogen atom such as nitrogen in -[CH₂CHCONH₂]-, resulting in a dipole in the molecule. Without being bound to a specific theory, it is assumed that in polymers with - [CH₂CHCOOLi]- units, one hydrogen from a water molecule can be pulled towards oxygen lone pairs. Meanwhile, the negative oxygen atom from water molecules can be attracted by lithium ion. In case of a polymer with -[CH₂CHCONH₂]- units, hydrogen bonds can form between a positive hydrogen from water molecules and negative nitrogen atom in the functional group of each polymer unit. The rearrangement of the system leads to a decreased energy and increased entropy. The water molecules thus are locked by the water absorptive polymer in the polymer salt system or the polymer metal adduct system instead of free moving in the normal inorganic aqueous electrolyte system. Therefore, hydrogen or oxygen evolution which happens on the electrode surface by the decomposition of agglomerated water molecules can be limited. Advantageously, a widening potential window thus can be obtained in the aqueous polymer electrolyte system. Advantageously, polyacrylate and polyacrylamide polymers provide the functionality of a super absorbent polymer which can absorb and retain water.

The repeat unit optionally can comprise a group Z. Z may be a group -O- and with X¹, X² and Y¹, Y² being hydrogen the repeat unit may form ethylene glycol units. Another preferred polymer component is poly(ethylene glycol). Poly(ethylene glycol) is readily available as a synthetic polyether in a range of molecular weights.

The length and molecular weight of the polymer component can vary. In embodiments, the polymer component comprises in a range of ≥ 2 to ≤ 50,000 repeat units, preferably in the range of ≥ 10 to ≤ 40,000 repeat units, more preferably in the range of ≥ 20 to ≤ 4,000 repeat units.

In embodiments, the polymer component may have a weight-average molecular weight M_{w} in the range of ≥ 1,000 g/mol to ≤ 3,000,000 g/mol, preferably in the range of ≥ 2,000 g/mol to ≤ 300,000 g/mol. M_{w} may be determined by light scattering. In further embodiments, the polymer component may have a viscosity-average molecular weight Mᵥ in the range of ≥ 1,000 g/mol to ≤ 3,000,000 g/mol, preferably in the range of ≥ 2,000 g/mol to ≤ 300,000 g/mol. Mᵥ may be determined by dilute solution viscometry at a temperature of 20 ± 2 °C.

The average molecular weight may be given as viscosity-average molecular weight Mᵥ for a polymer in liquid or gel state, dissolved or suspended in a solvent. In embodiments of polyacrylate the average molecular weight may be given as Mᵥ. The average molecular weight may be given as weight-average molecular weight M_{w} in for a polymer in solid state, for example as a powder. In embodiments of polyacrylamide polymers the average molecular weight may be given as M_{w}.

In embodiments of polyacrylate and polyacrylamide polymers, n can be in the range of ≥ 10 to ≤ 100 and/or M_{w} or Mᵥ can be in a range of ≥ 1,000 g/mol to ≤ 10,000 g/mol. In these embodiments the length of the polymer chains is short, which provides a better mobility in the aqueous electrolyte. In these embodiments, a short chain lithium polyacrylate polymer may be described as (LiPAA)₁₀-(LiPAA)₁₀₀. In other embodiments n can be in the range of ≥ 200 to ≤ 2,000 and/or M_{w} or Mᵥ can be in a range of ≥ 15,000 g/mol to ≤ 300,000 g/mol. It was found that the conductivity of electrolytes including longer lithium polyacrylate polymer chains was higher than the conductivity of those including shorter chains.

The polymer salt can be employed as a base for an aqueous electrolyte by mixing with different amounts of water in the electrolyte system. It is assumed that the polymers absorb large amount of water molecules, and thus prohibit water decomposition at the electrodes. In embodiments, the aqueous polymer electrolyte comprises the metal ion component and the polymer component in a range of ≥ 15 wt% to ≤ 85 wt%, preferably in a range of ≥ 30 wt% to ≤ 70 wt%, more preferably in a range of ≥ 50 wt% to ≤ 70 wt%, even more preferably in a range of ≥ 50 wt% to ≤ 60 wt. referring to a total amount of the aqueous polymer electrolyte of 100 wt%. The electrolyte may further comprise water in a range of ≥ 15 wt% to ≤ 85 wt%, preferably in a range of ≥ 30 wt% to ≤ 70 wt%, more preferably in a range of ≥ 30 wt% to ≤ 50 wt%, even more preferably in a range of ≥ 50 wt% to ≤ 60 wt%, respectively, referring to a total amount of the aqueous polymer electrolyte of 100 wt%. In these ranges a good conductivity could be shown.

Weight percent, or wt%, are synonyms that refer to the concentration of a component as the weight of the component divided by the weight of the composition and multiplied by 100. The weight percent (wt%) of the components are calculated based on the total weight amount of the electrolyte, if not stated otherwise. The total amount of all components of the electrolyte does not exceed 100 wt%. Given the amount of metal ion component and polymer component, and optionally additives, the remainder up to 100 wt% of the electrolyte may be water. If, for example, the aqueous polymer electrolyte comprises 70 wt% of the metal ion component and the polymer component, the electrolyte may comprise 30 wt% water.

The polymer and the metal ion component can be also mixed with other common salts used in battery. In embodiments, the aqueous polymer electrolyte comprises one or more metal salts selected from the group consisting of LiNO₃, Li₂SO₄, LiCl, LiClO₄, LiOH, LiCF₃SO₃, LiTDI, LiDCA, LiBETI, LiFSI (lithium bis(fluorosulfonyl)imide), LiTFSI (lithium bis(trifluoromethanesulfonyl)imide), NaNO₃, Na₂SO₄, NaCl, NaClO₄ NaFSI, NaTFSI, NaOH, KNO₃, K₂SO₄, KCl, KClO₄, KOH, Mg(NO₃)₂, MgSO₄, MgCl₂, Ca(NO₃)₂, CaSO₄, CaCl₂, Fe(NO₃)₂, FeSO₄, FeCl₂, AlCl₃ Al(NO₃)₃, Al₂(SO₄)₃, FeCl₃, Fe(NO₃)₃ and Fe₂(SO₄)₃.

A further aspect of the invention relates to a method for preparing an aqueous polymer electrolyte, the method comprising the following steps:
a) solving a metal salt wherein the metal cation is selected from the group consisting of Li⁺, Na⁺, K⁺, Mg²⁺, Al³⁺, Ca²⁺, Fe²⁺, Fe³⁺ and Zn²⁺ in water to form a solution of a metal ion component;
b) providing a polymer comprising repeat units according to formula (I): -[C(X¹)(X²)-C(Y¹)(Y²)-Z]- wherein:
   - X¹, X²: are selected, the same or independently from the other, from the group consisting of -H, -OH, -CH₃, -NH₂, -CH₂OH and -C₆H₉(OH)₂;
   - Y¹, Y²: are selected, the same or independently from the other, from the group consisting of -H, -CH₃, -NC₄H₆O, -CONH₂, -COOH, -COO-, C₆H₁₀SO₂O- and -C₆H₁₀SO₂OH;
   - Z: is an optional element selected from the group consisting of -O-, -CH₂-, -CO- and methyl cellulose;
c) mixing the solution of the metal ion component obtained from step a) and the polymer component from step b), thereby forming a dispersion of the metal ion component and the polymer component;
d) drying the dispersion comprising the metal ion component and the polymer component obtained from step c); and
e) dispersing the metal ion component and the polymer component obtained from step d) in water to form the aqueous polymer electrolyte.

The method advantageously provides a facile approach to form an aqueous polymer electrolyte.

The metal cation in step a) is provided in the form of a salt. The term "salt" as used herein refers to a metal compound wherein the metal is provided in cationic form together with an anionic counter compound. The metal salt may be an inorganic metal salt or an organic metal salt.

The metal salt may be selected from the group consisting of LiNO₃, Li₂SO₄, LiCl, LiClO₄, LiOH, LiCF₃SO₃, LiTDI, LiDCA, LiBETI, LiFSI (lithium bis(fluorosulfonyl)imide), LiTFSI (lithium bis(trifluoromethanesulfonyl)imide), NaNO₃, Na₂SO₄, NaCl, NaClO₄, NaFSI, NaTFSI, NaOH, KNO₃, K₂SO₄, KCl, KClO₄, KOH, Mg(NO₃)₂, MgSO₄, MgCl₂, Ca(NO₃)₂, CaSO₄, CaCl₂, Fe(NO₃)₂, FeSO₄, FeCl₂, AlCl₃ Al(NO₃)₃, Al₂(SO₄)₃, FeCl₃, Fe(NO₃)₃ and Fe₂(SO₄)₃. In preferred embodiments, the metal salt in step a) is selected from the group consisting of LiOH, NaOH, LiCO₃ and NaCO₃. The carbonate anions can vanish in the form of CO₂ upon heating. In other preferred embodiments, the metal salt in step a) is selected from LiFSI, LiTFSI, NaFSI and NaTFSI.

Dissolving of the metal salt in water may include agitating the mixture to form a solution or a dispersion, depending on the nature of the anion. As used herein the term solution thus also includes a dispersion. The mixing may be supported by stirring.

In step b) the polymer component is provided. Preferred polymer components are poly(acrylate) and poly(acrylamide) and copolymers thereof. The polymer may comprise repeat units -[CH₂CHCONH₂]- or repeat units -[CH₂CHCOOH]-. Another preferred polymer component is poly(ethylene glycol). The length and molecular weight of the polymer component can vary. In embodiments, the polymer may comprise in a range of ≥ 2 to ≤ 50,000 repeat units, preferably in the range of ≥ 10 to ≤ 40,000, more preferably in the range of ≥ 20 to ≤ 4,000 repeat units. In embodiments, the polymer component has an average molecular weight M_{w} or Mᵥ in the range of ≥ 1,000 g/mol to ≤ 3,000,000 g/mol, preferably in the range of ≥ 2,000 g/mol to ≤ 300,000 g/mol. Particularly in case of polyacrylate and polyacrylamide polymers n can be in the range of ≥ 10 to ≤100 or in the range of ≥ 200 to ≤ 2,000 and/or M_{w} or Mᵥ can be in a range of ≥ 1,000 g/mol to ≤ 10,000 g/mol or in a range of ≥ 150,000 g/mol to ≤ 300,000 g/mol.

The polymer may be provided in dry form. Alternatively, the polymer comprising repeat units according to formula (I) is dispersed in a solvent to obtain a dispersion of the polymer component. In embodiments, in step b) a dispersion of the polymer component and water may be formed by dispersing a polymer comprising repeat units according to formula (I):-[C(X¹)(X²)-C(Y¹)(Y²)-Z]-. Preferably, the solvent in the step b) is water, particularly deionized water. The polymer may be commercially available as a solution or dispersion, and water may be further added. A dilution of the polymer solution may enhance the interaction of polymer units and metal cations. In embodiments, in step b) a dispersion of the polymer component and water is formed, wherein the weight ratio of water to polymer is in a range from ≥ 1:10 to ≤ 500: 1, preferably in a range from ≥ 1:1 to ≤ 100:1, and more preferably in a range from ≥ 2:1 to ≤ 50:1.

In step c) the solution of the metal ion component and the polymer component or a dispersion of the polymer component are mixed, thereby forming a dispersion of the metal ion component and the polymer component.

It is preferred that the metal cation is provided in a stoichiometric amount in regard of the repeat units of the polymer. The term "stoichiometric amount" in this sense refers to the amount of the repeat units and metal salt required for a respective polymer, in accordance with the ratio of the equivalent weights, for producing the respective pairing of metal component and repeat units. To produce for example a lithium polyacrylate (LiPAA)ₙ polymer salt, n mol of a lithium salt are used to match the n mol of acrylate repeat units of the polyacrylate polymer, so that each hydrogen of the carboxyl groups may be replaced by a lithium cation. The stoichiometric ratio may be observed by either solving or dispersing stoichiometric amounts of metal salt and polymer in step a) and/or b), or by adding stoichiometric amounts of polymer to the solution of the metal ion component in step c).

Preferably the mixing in step c) is supported by stirring. Further, the mixing may be supported by heating the solution. In embodiments where the polymer component is a polyacrylate polymer, preferably a neutral dispersion is formed in step c), particularly a dispersion having a pH of 7. In embodiments where the polymer component is a polyacrylamide or other non-charged polymer, the pH value may not be adjusted to a specific value.

In step d) the mixture is dried. Drying may be accomplished by elevated temperatures and/or using vacuum conditions. In embodiments, the dispersion is dried under vacuum conditions at a temperature in a range of ≥ 20 °C to ≤ 120 °C. Preferably the dispersion is dried under vacuum in a range of ≥ 1x10⁻³ mbar to ≤ 1x10⁻² mbar and at a temperature in a range of ≥ 60 °C to ≤ 80 °C.

To form a defined aqueous polymer electrolyte the dried salt and polymer component are dispersed in defined amounts of deionized water. The salt and polymer component amount to a content in a range of ≥ 5 wt% to ≤ 95 wt%, referring to a total amount of the aqueous polymer electrolyte of 100 wt%. Preferably, the salt and polymer component may amount to a content in a range of ≥ 15 wt% to ≤ 85 wt%, preferably in a range of ≥ 30 wt% to ≤ 70 wt%, more preferably in a range of ≥ 50 wt% to ≤ 70 wt%, even more preferably in a range of ≥ 50 wt% to ≤ 60 wt%, and water may amount to a content in a range of ≥ 15 wt% to ≤ 85 wt%, preferably in a range of ≥ 30 wt% to ≤ 70 wt%, more preferably in a range of ≥ 30 wt% to ≤ 50 wt%, even more preferably in a range of ≥ 50 wt% to ≤ 60 wt%, respectively, referring to a total amount of the aqueous polymer electrolyte of 100 wt% are mixed in the step f).

Another aspect of the invention refers to an aqueous polymer electrolyte obtained by the method according to the invention as described above.

Another aspect of the invention refers to an energy storage device, comprising a positive electrode, a negative electrode, and an electrolyte disposed between the positive electrode and the negative electrode, wherein the electrolyte is an aqueous polymer electrolyte according to the invention or prepared by the method according to the invention as described above.

The term "energy storage device" encompasses single-use batteries (primary storage cells) and rechargeable cells (secondary storage cells). In the general terminology, however, rechargeable cells are frequently designated likewise using the term "battery", which is widely used as a generic term. For example, the term "lithium ion battery" is used synonymously with "rechargeable lithium ion battery". Lithium-based energy storage devices are preferably selected from the group comprising primary lithium batteries, primary lithium ion batteries, secondary lithium ion batteries, primary lithium polymer batteries, or lithium ion capacitors.

The energy storage device preferably is an electrochemical energy storage device. In preferred embodiments, the electrochemical energy storage device is a lithium-ion battery, a lithium-ion capacitor or a super capacitor. A lithium-ion battery for example can comprise a positive electrode, a negative electrode, an electrolyte disposed between the positive electrode and the negative electrode, wherein the electrolyte is an aqueous polymer electrolyte according to the invention or prepared by the method according to the invention as described above.

Another aspect of the invention refers to the use of the aqueous polymer electrolyte of the invention or prepared by the method according to the invention as electrolyte for energy storage devices, particularly electrochemical storage devices, particularly as electrolyte in lithium-ion batteries, lithium-ion capacitors and super capacitors.

Unless otherwise defined, the technical and scientific terms used herein have the same meaning as commonly understood by one of ordinary skill in the art to which this invention belongs.

Examples and figures which serve for illustrating the present invention are indicated hereinafter.

The figures, in this context, show the following:
- Figure 1: Arrhenius conductivity plots of aqueous polymer electrolytes with different amounts of water of example 1.
- Figure 2: an FTIR spectrum of a long chain LiPAA polymer salt without water of example 2.
- Figure 3: Arrhenius conductivity plots of aqueous polymer electrolytes with 50 wt%, 60 wt% and 70 wt% of water of water of example 2.
- Figure 4: Oxidation potentials of the electrolytes with 50 wt%, 60 wt% 70 wt% and 85 wt% of water provided in examples 2-1, 2-2, 2-3.
- Figure 5: Reduction potentials of the electrolytes with 50 wt%, 60 wt% 70 wt% and 85 wt% of water provided in example 2-1, 2-2, 2-3.
- Figure 6: Cyclic voltammogramm in aqueous lithium polyacrylate (LiPAA) electrolyte comprising 30 wt% LiPAA.
- Figure 7: Cyclic voltammogramm in aqueous lithium polyacrylate (LiPAA) electrolyte comprising 40 wt% LiPAA.
- Figure 8: Cyclic voltammogramm in aqueous lithium polyacrylate (LiPAA) electrolyte comprising 50 wt% LiPAA.
- Figure 9: Cycle life of a LiMn₂O₄/ LiTi₂(PO₄)₃ aqueous lithium-ion battery with the electrolyte comprising 40% Li-PAA of example 2-2.
- Figure 10: Cycle life of a LiMn₂O₄/ LiTi₂(PO₄)₃ aqueous lithium-ion battery with the electrolyte comprising 25% LiTFSI and 7.5% PAM of example 3-1.

### Example 1

### Preparation of aqueous short chain lithium polyacrylate (LiPAA) electrolytes

A short chain lithium polyacrylate (LiPAA) polymer salt was prepared using poly(acrylic acid) (PAA) with an average molecular weight of 2000 g/mol. 12.2 ml of poly(acrylic acid) solution (70 wt% in water, average Mᵥ 2000 g/mol, Sigma Aldrich) were suspended in 200 ml deionized water to form a mixture of deionized water and polymer where the weight ratio of deionized water to polymer was 15:1. 2.45 g of lithium hydroxide hydrate (LiOH·H₂O, Sigma Aldrich) were solved in deionized water to form 12.25 g of a 6 mol/L salt solution. 12.25 g of the salt solution of lithium hydroxide hydrate (LiOH·H₂O) and 100 g of the diluted poly(acrylic acid) polymer solution were mixed in a neutralization reaction, so that in the mixed solution lithium hydroxide and carboxyl groups had a stoichiometric ratio of 1:1. After 24 h stirring at room temperature (20±2 °C), the pH value was checked by pH controller, and LiOH solution or poly(acrylic acid) solution were added to keep a pH of 7.0. The suspension was then heated at 80°C for 72 h to evaporate most of the water. After the solution turned to gel state, the gel composite was transferred into a vacuum oven at 80 °C for 72 h in order to remove rest water.

The obtained dry polymer salt was mixed with different amounts of deoxygenized and deionized water. The amounts of polymer salt and water used to prepare the different electrolytes are shown in Table 1. The electrolyte comprising 30 wt% water formed a nearly-solid gel, while the electrolytes comprising 40 wt% and 50 wt% water formed high viscous gels.

**Table 1: short chain Li-PAA polymer aqueous electrolytes**

| Example | Dissolving | electrolyte |
|---|---|---|
| 1-1 | 5g LiPAA in 5g H₂O | 50 wt% LiPAA |
| 1-2 | 4g LiPAA in 6g H₂O | 40 wt% LiPAA |
| 1-3 | 3g LiPAA in 7g H₂O | 30 wt% LiPAA |

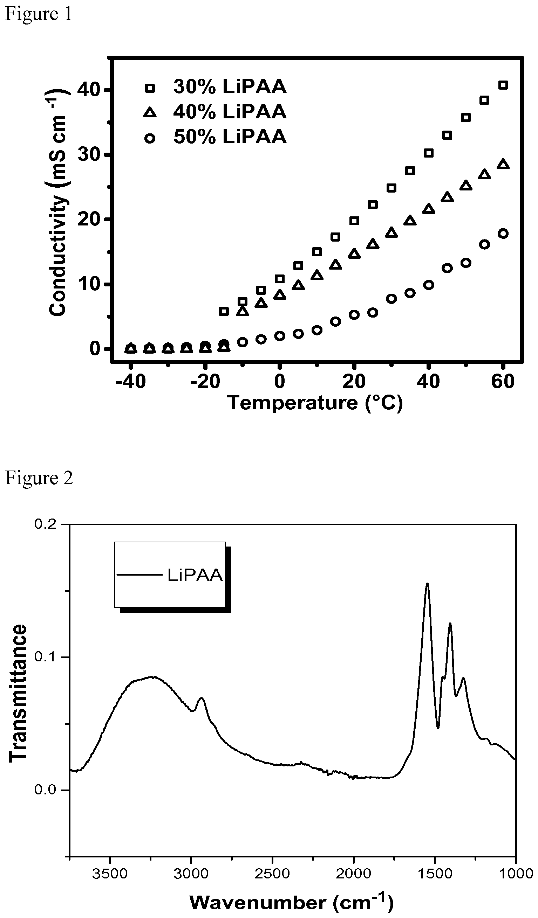

The conductivity of the electrolytes 1-1, 1-2 and 1-3 obtained from short chain LiPAA salt with different amounts of water were measured and the Arrhenius conductivity plots of the electrolytes are shown in figure 1. The percentages as indicated in figure 1 refer to the respective LiPAA content per weight. As can be taken from Figure 1, with conductivities above 6 mS cm⁻¹ at 20 °C for the 50 wt% gel electrolyte 1-1, the value is similar to those of commercial Li-ion electrolytes (σ = 5-11 mS cm⁻¹). For the electrolyte 1-2 comprising 40 wt% LiPAA, conductivities above 15 mS cm⁻¹ were recorded at 20 °C, and for the electrolyte 1-3 comprising 30 wt% LiPAA conductivities reached 20 mS cm⁻¹ at 20 °C.

### Example 2

### Preparation of aqueous long chain lithium polyacrylate (LiPAA) electrolytes

Long chain lithium polyacrylate polymer salt was prepared using poly(acrylic acid) with a molecular weight of 150,000 g/mol (70 wt% in water, average Mᵥ 150,000 g/mol, Sigma Aldrich), as described under example 1. 24.5 g of the salt solution of lithium hydroxide hydrate (LiOH·H₂O) and 200 g of the poly(acrylic acid) polymer solution were mixed in the neutralization reaction.

A Fourier transform infrared spectroscopy (FTIR) spectrum of the obtained long chain LiPAA polymer salt was taken on a Bruker- Ram II- Vertex 70 and is shown in figure 2. As can be taken from figure 2, a long chain lithium polyacrylate polymer salt was successfully prepared.

The obtained dry polymer salt was mixed with different amounts of deoxygenized and deionized water. The amounts of polymer salt and water used to prepare the different electrolytes are shown in Table 2.

**Table 2: long chain Li-PAA polymer aqueous electrolytes**

| Example | Dissolving | electrolyte |
|---|---|---|
| 2-0 | - | 100% LiPAA |
| 2-1 | 5g LiPAA in 5g H₂O | 50% LiPAA |
| 2-2 | 4g LiPAA in 6g H₂O | 40% LiPAA |
| 2-3 | 3g LiPAA in 7g H₂O | 30% LiPAA |
| 2-4 | 1.5g LiPAA in 8.5g H₂O | 15% LiPAA |
| 2-5 | 7g LiPAA in 3g H₂O | 70% LiPAA |

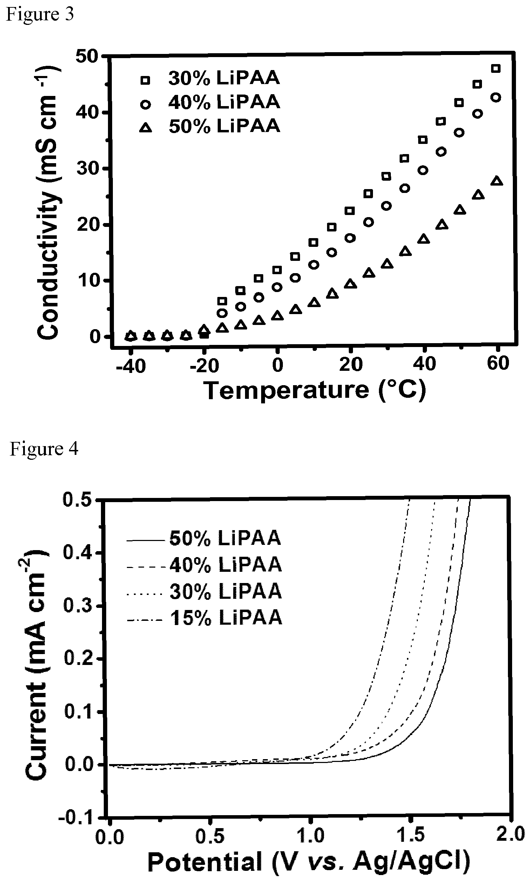

It was seen that gels with dimensional stability were obtained for 50 wt% of LiPAA and above, while the aqueous electrolytes containing 15 wt% and 30 wt% LiPAA were viscous liquids. The conductivity of the electrolytes 2-1, 2-2 and 2-3 and 2-4 obtained from long chain LiPAA salt with different amount of water were measured and the Arrhenius plots of the conductivities of the electrolytes are shown in Figure 3. The percentages as indicated in the figure 3 refer to the respective LiPAA content per weight.

As can be taken from figure 3, conductivities above 9 mS cm⁻¹ at 20 °C were achieved for the 50 wt% gel electrolyte 2-1. This value is similar to those of commercial Li-ion electrolytes (σ = 5-11 mS cm⁻¹). For the electrolyte 2-2 comprising 40 wt% LiPAA, conductivities above 17 mS cm⁻¹ were recorded at 20 °C and for the electrolyte 3-3 comprising 30 wt% LiPAA conductivities reached 23 mS cm⁻¹ at 20 °C. These conductivities are especially high considering that the anionic movement is a priori limited, especially for the gels and thus the conductivities are assumed to be related to Li⁺ transport, at least preponderantly.

### Example 3

### Preparation of aqueous long chain lithium polyacrylamide (LiPAM) electrolytes

9.98 g of bis(trifluoromethane)sulfonimide lithium (LiTFSI) (Sigma Aldrich) were solved in deionized water to form 25 g of a 1 mol/L salt solution. 2.47 g of poly acrylamide having a molecular weight of 150,000 g/mol (powder, Sigma Aldrich) were suspended in the 25g LiTFSI solution, so that the mixed suspension of LiTFSI and the poly(acrylamide) units had a stoichiometric ratio of 1:1. The suspension was incubated for 20 h at a temperature of 60 °C, before being transferred into a vacuum oven at 80 °C for 72 h in order to remove the water.

The obtained dry polymer adduct was mixed with deoxygenized and deionized water. The amounts used are shown in Table 3.

**Table 3: aqueous Li-PAM polymer electrolyte**

| Example | Dissolving | electrolyte |
|---|---|---|
| 3-1 | 6.5g PAM-LiTFSI in 13.5g H₂O | 50% PAM-LiTFSI |

It was seen that the electrolyte comprising 50 wt% of LiPAM-LiTFSI adduct in water was a viscous liquid. The conductivity was measured and a conductivity of 26.9 mS cm⁻¹ at 20 °C was achieved for the 50 wt% PAM-LiTFSI electrolyte 3-1.

### Electrode materials:

The cathode materials spinel LiMn₂O₄ and LiNi_{0.5}Mn₁.₅O₄ were purchased from Shanshan Technology Corporation and used without further purification.

### Synthesis of LiTi₂(PO₄)₃

LiTi₂(PO₄)₃ was synthesized by a phytic acid assisted solid-state method. 17 mL tetrabutyl titanate (Ti(OC₄H₉)₄, TBT) was first added to 500 mL of mixed butyl/ethanol (3:7 in volume ratio) solution under constant stirring to form white suspension. After stirring for 0.5 hours, 3.12 g lithium dihydrogen phosphate (LiH₂PO₄) which was dissolved in 10 mL distilled water and 9.25 mL phytic acid (50 wt% in water) were added to the solution. The mixed solution was further stirred at room temperature for 4 hours. The collected precipitate was washed with ethanol and distilled water, followed by drying at 80°C to form the precursor. The LTP/C composite was obtained by heating the as-prepared precursor at 750°C for 4 hours under argon atmosphere.

### Synthesis of TiO₂:

In a typical process, 120 mL of ethanol solution containing 20 g of tetrabutyl titanate and 1.2 g of acetic acid was dropwise added into 240 mL of water/ethanol solution (3:1 in volume ratio) containing 8 g of oxalic acid (OA) and 0.8 g of sodium dodecylbenzenesulfonate (SDBS) under stirring at room temperature. The resulting light brown slurry was further stirred for 3 hours and additionally aged for 1 hour. The precipitate was collected by centrifuge and repeatedly washed with ethanol and deionized water, and then dried at 80°C. The obtained nanocomposite was further calcined at 600 °C for 5 hours under air, resulting in the TiO₂ product.

The crystal structure of the prepared materials was confirmed by X-ray diffraction (XRD) on a Bruker D8 Advance (Bruker) diffractometer with Cu Kα radiation (1.54 Å) at room temperature. The pattern was recorded in the 2θ range of 10-90° at a scan rate of 0.0197° per step and a count time per step of Is. The particle morphology was evaluated using field-emission scanning electron microscopy (FE-SEM, Zeiss Auriga).

### Electrode preparation:

The slurry to prepare the electrodes was obtained by mixing the active materials, conductive carbon (Super C65, Timcal) and a binder (polyvinylidene difluoride PVdF, Kynar® FLEX 2801, Arkema Group) in a weight ratio of 80:12.5:7.5, with N-methyl-2-pyrrolidone (NMP) as the processing solvent. The well-mixed slurry was coated on a Cu foil and dried at 80 °C overnight. After being punched into Ø 13 mm discs, the electrodes were further pressed on a Ø 12 mm steel/aluminum mesh. The Cu foil was then removed and the electrodes were dried for 12 h under vacuum at 100 °C.

### Electrochemical Measurements:

The electrochemical performance was evaluated with a Swaglok™ cell system. The cathode and anode were separated by glass fiber (Whatman GF/D) impregnated with the electrolytes. Galvanostatic cycling tests were carried out on MACCOR series 4000 battery testers at various current rates.

### Example 4

### Linear sweep voltammetry of aqueous lithium polyacrylate (LiPAA) electrolytes

Linear sweep voltammetry using a low scan rate of 0.1 mVs⁻¹ using platinum as a working electrode was conducted for the aqueous lithium polyacrylate (LiPAA) electrolytes 2-1 to 2-4 of example 2 comprising 50 wt%, 40 wt%, 30 wt% or 15 wt% LiPAA, respectively. The sweep rate was set to 5 mV s⁻¹.

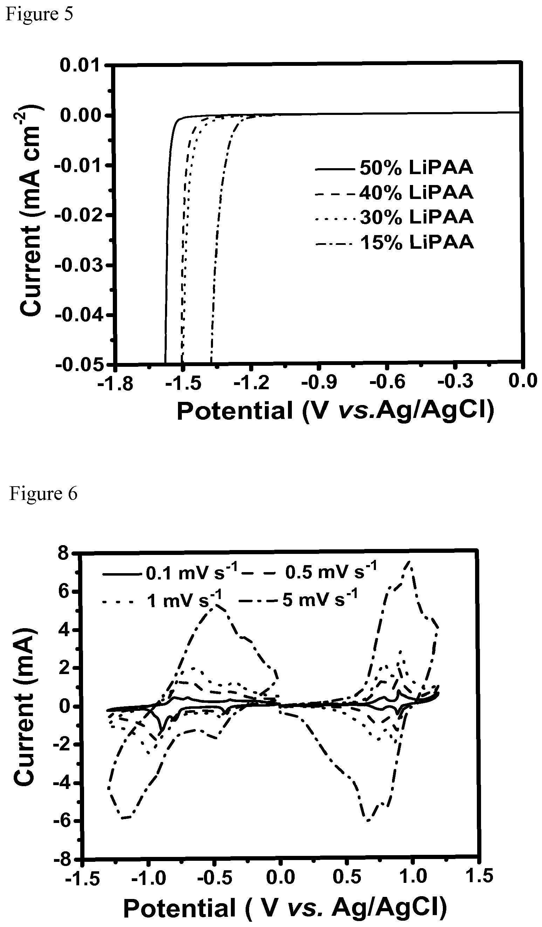

The oxidation limit and reduction limit are shown in Figure 4 and Figure 5, respectively. The potential is given vs. Ag/AgCl. As can be taken from the figure 4 and 5, the electrochemical stability window (ESW) of the aqueous electrolyte increased with polymer content, with an increase of ca. 300 mV in the cathodic direction and of ca. 400 mV towards oxidation from 15 wt% to 50 wt% LiPAA. The electrochemical stability window was 1.86 V for the 15 wt% LiPAA electrolyte and 2.61 V for the 50 wt% LiPAA electrolyte on platinum, respectively. Especially in the anodic direction, a steep increase was observed for the 50 wt% LiPAA electrolyte on aluminum, and the potential window was expanded to 3.2V.

### Example 5

### Cyclic voltammetry of aqueous lithium polyacrylate (LiPAA) electrolytes

Cyclic voltammetry was conducted for the aqueous lithium polyacrylate (LiPAA) electrolytes 2-1 to 2-3 of example 2 comprising 50 wt%, 40 wt%, and 30 wt% LiPAA, respectively. As cathode material LiMn₂O₄ was used, since LiMn₂O₄ operates within the ESW of water. As anode material the carbon coated LiTi₂(PO₄)₃ was used. Cyclic voltammogramms of the LiMn₂O₄ cathode were taken at various scan rates in potential range 0 V to 1.0 V vs. Ag/AgCl and for the LiTi₂(PO₄)₃ anode at various scan rates in a potential range 0 V to 1.3 V vs. Ag/AgCl. The respective cell was polarized for 5 continuous cyclic sweeps.

The Figures 6, 7 and 8 show the cyclic voltammogramms in aqueous lithium polyacrylate (LiPAA) electrolytes comprising 30 wt%, 40 wt%, and 50 wt% LiPAA, respectively. The oxidation and reduction potentials are given vs. Ag/AgCl as shown. Figure 6 shows for LiMn₂O₄ in 30% Li-PAA (Example 2-3) two pairs of redox peaks which are located at 0.79V, and 0.91V (oxidation potentials vs. Ag/AgCl), and 0.76 V and 0.89V (reduction potentials vs. Ag/AgCl) in the potential range from 0V to 1.0V, which agree well with the insertion/extraction reaction of LiMn₂O₄ in an organic electrolyte. With the increase of the scan rate, the polarization of the electrode process increases gradually, as is indicated by the increasing separation between reduction and oxidation peaks.

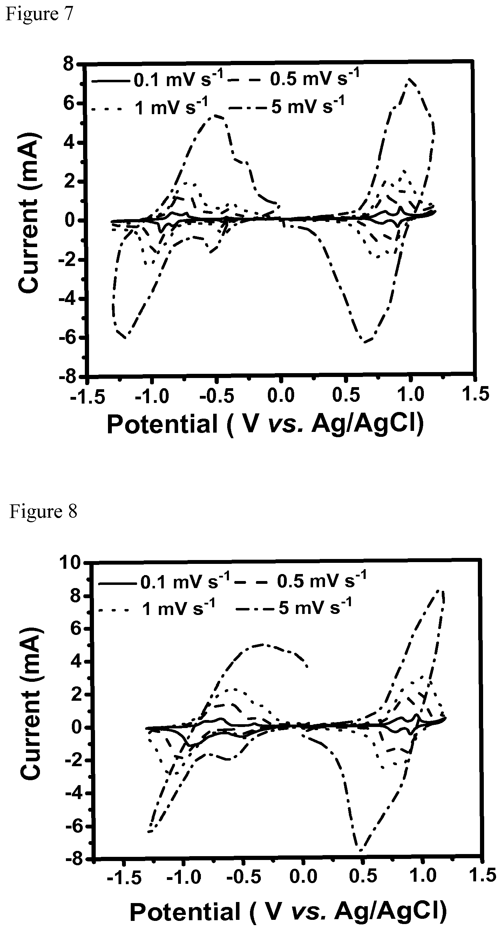

In the case of the higher concentration of 40% and 50% Li-PAA electrolytes (Example 2-1 and 2-2), two couples of well-separated redox peaks can still be clearly seen at low scan rate in the figures 7 and 8. However, as the scan rate goes higher, the overlapping of the neighboring reduction or oxidation peaks of the LiMn₂O₄ electrode becomes very obvious. Especially for the 50% Li-PAA electrolyte, the oxidation peak was incomplete when the scan rate was higher than 5 mVs⁻¹. LiTi₂(PO₄)₃ exhibits three pairs of Li-ion insertion/extraction peaks at -0.42 V (reduction potential vs. Ag/AgCl), -0.79V (reduction potential vs. Ag/AgCl), -0.89 V (reduction potential vs. Ag/AgCl), -0.80 V(oxidation potential vs. Ag/AgCl), - 0.71V(oxidation potential vs. Ag/AgCl), -0.37V(oxidation potential vs. Ag/AgCl) in the potential range from 0V to -1.3V, with the insertion/extraction of LiTi₂(PO₄)₃ before H₂ evolution. The peaks shifting trend was similar as in case of the LiMn₂O₄ cathode.

### Example 6

### Determination of the cycling stability of aqueous lithium polyacrylate (LiPAA) electrolytes

The aqueous lithium polyacrylate (LiPAA) electrolytes 2-1 and 2-2 of example 2 comprising 50 wt% and 40 wt% LiPAA, respectively, were used for the determination of cycle life. LiMn₂O₄ was used for the cathode and carbon coated LiTi₂(PO₄)₃ was used as anode material. The cell was tested for 100 cycles at a current rate of 0.5C (1C=120 mA g⁻¹) between 0.8 and 2 V.

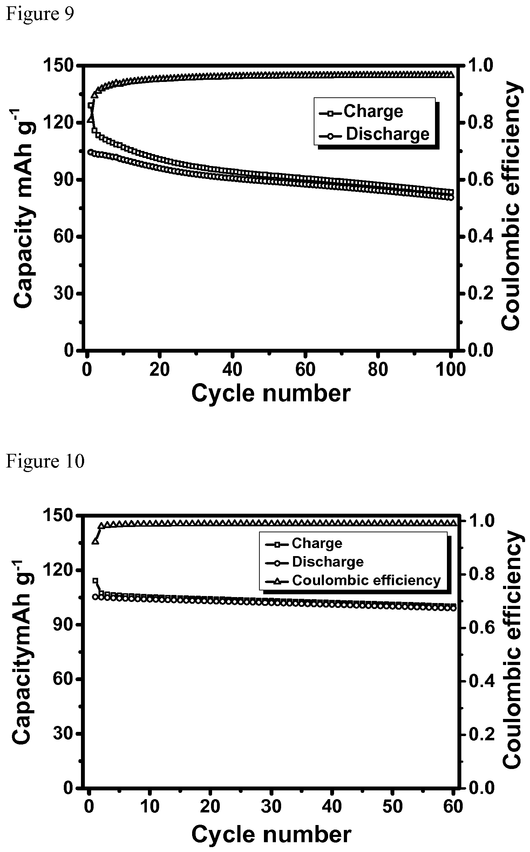

Figures 9 shows the cycling life of the LiMn₂O₄/ LiTi₂(PO₄)₃ aqueous lithium-ion battery with 40% Li-PAA electrolyte. The capacity was calculated based on LiMn₂O₄ material, the ratio between LiMn₂O₄/ LiTi₂(PO₄)₃ is 1.0:0.8. As can be taken from the figure 9, the battery exhibited a 76.5% capacity retention after 100 cycles for the 40% Li-PAA polymer aqueous electrolyte.

The aqueous lithium polyacrylate electrolyte comprising 50 wt% LiPAA showed only 6% capacity loss after 100 cycles, thus exhibiting even better cycling stability for the LiTi₂(PO₄)₃/LiMn₂O₄ cell, which delivered rather stable capacity for 100 cycles with 77 Wh kg⁻¹ for the first cycle and a remarkable capacity retention with 71 Wh kg⁻¹ after 100 cycles. In this case, the voltage profiles are hardly affected by the cycling with efficiencies close to 100%.

### Example 7

### Determination of the cycling stability of aqueous lithium polyacrylamide electrolyte

Using LiMn₂O₄ for the cathode and carbon coated LiTi₂(PO₄)₃ was used as anode material as described in example 6, also the aqueous poly(acrylamide) (PAM) / bis(trifluoromethane)sulfonimide lithium (LiTFSI) electrolyte of example 3-1 comprising 50 wt% PAM-LiTFSI was determined for cycle life. The cell was tested for 60 cycles at a current rate of 0.5C (1C=120 mA g⁻¹) between 0.8 and 2 V.

Figure 10 shows the cycling life of the LiMn₂O₄/ LiTi₂(PO₄)₃ aqueous lithium-ion battery with 25% LiTFSI and 7.5% PAM of example 3-1. The capacity was calculated based on LiMn₂O₄ material, the ratio between LiMn₂O₄/ LiTi₂(PO₄)₃ was 1.0:1.0. As can be taken from the figure 10, the battery exhibited only 6.5 % capacity loss after 60 cycles. The aqueous poly(acrylamide) (PAM) / bis(trifluoromethane)sulfonimide lithium (LiTFSI) electrolyte also delivered a stable capacity for 60 cycles with 76.8 Wh kg⁻¹ for the first cycle and a remarkable capacity retention with 70 Wh kg⁻¹ after 60 cycles.

In summary, the results show aqueous electrolytes, based on a widespread and non-toxic ionomer, PAA, which provide new, cheap, safe and environmentally benign electrolytes for lithium ion and also sodium and other battery systems. In particular, the LiPAA electrolytes provided a leak-free and dimensionally stable gel electrolyte, exhibited a high conductivity, with a particularly noticeable enlargement of the electrochemical stability window (ESW) in the cathodic direction. This allows assembling environmentally friendly batteries, free of nickel, cobalt and fluorine, which can be operated up to 2.7V.

The work leading to this invention has received funding from the BMBF, project no 29120305 "KaLiPat".

## Claims

1. An aqueous polymer electrolyte comprising:
a) water in a range of ≥ 5 wt% to ≤ 95 wt%,
b) a metal ion component comprising a metal cation selected from the group consisting of Li⁺, Na⁺, K⁺, Mg²⁺, Al³⁺, Ca²⁺, Fe²⁺, Fe³⁺ and Zn²⁺, and
c) a polymer component comprising repeat units according to the following formula (I) : -[C(X¹)(X²)-C(Y¹)(Y²)-Z]- wherein:
X¹, X² are selected, the same or independently from the other, from the group consisting of -H, -OH, -CH₃, -NH₂, -CH₂OH and -C₆H₉(OH)₂;
Y¹, Y² are selected, the same or independently from the other, from the group consisting of -H, -CH₃, -NC₄H₆O, -CONH₂, -COOH, -COO-, C₆H₁₀SO₂O⁻ and -C₆H₁₀SO₂OH;
Z is an optional element selected from the group consisting of -O-, -CH₂-, -CO- and methyl cellulose;
wherein the metal ion component and the polymer component together amount to a content range of ≥ 5 wt% to ≤ 95 wt%, all wt% referring to a total amount of the aqueous polymer electrolyte of 100 wt%.

2. The electrolyte according to claim 1, wherein the metal cation is Li⁺ or Na⁺.

3. The electrolyte according to claim 1 or 2, wherein the polymer component and the metal ion component form a polymer salt comprising repeat units -[CH₂CHCOOLi]-.

4. The electrolyte according to claim 1 or 2, wherein the polymer comprises repeat units -[CH₂CHCONH₂]-.

5. The electrolyte according to any one of the preceding claims, wherein the polymer comprises in a range of ≥ 2 to ≤ 50,000, preferably in the range of ≥ 10 to ≤ 40,000, more preferably in the range of ≥ 20 to ≤ 4,000 repeat units.

6. The electrolyte according to any one of the preceding claims, wherein the polymer component has a weight-average molecular weight M_{w} in the range of ≥ 1,000 g/mol to ≤ 3,000,000 g/mol, preferably in the range of ≥ 2,000 g/mol to ≤ 300,000 g/mol.

7. The electrolyte according to any one of the preceding claims, wherein the aqueous polymer electrolyte comprises the metal ion component and the polymer component in a range of ≥ 15 wt% to ≤ 85 wt%, preferably in a range of ≤ 30 wt% to ≤ 70 wt%, more preferably in a range of ≥ 50 wt% to ≤ 70 wt%, even more preferably in a range of ≥ 50 wt% to ≤ 60 wt%, referring to a total amount of the aqueous polymer electrolyte of 100 wt%.

8. The electrolyte according to any one of the preceding claims, wherein the aqueous polymer electrolyte comprises one or more metal salts selected from the group consisting of LiNO₃, Li₂SO₄, LiCl, LiClO₄, LiOH, LiCF₃SO₃, LiTDI, LiDCA, LiBETI, LiFSI, LiTFSI, NaNO₃, Na₂SO₄, NaCl, NaClO₄, NaFSI, NaTFSI, NaOH, KNO₃, K₂SO₄, KCl, KClO₄, KOH, of Mg(NO₃)₂, MgSO₄, MgCl₂, Ca(NO₃)₂, CaSO₄, CaCl₂, Fe(NO₃)₂, FeSO₄, FeCl₂, AlCl₃ Al(NO₃)₃, Al₂(SO₄)₃, FeCl₃, Fe(NO₃)₃ and Fe₂(SO₄)₃.

9. A method for preparing an aqueous polymer electrolyte, the method comprising the following steps:
a) solving a metal salt wherein the metal cation is selected from the group consisting of Li⁺, Na⁺, K⁺, Mg²⁺, Al³⁺, Ca²⁺, Fe²⁺, Fe³⁺ and Zn²⁺ in water to form a solution of a metal ion component;
b) providing a polymer comprising repeat units according to formula (I): -[C(X¹)(X²)-C(Y¹)(Y²)-Z]- wherein:
X¹, X² are selected, the same or independently from the other, from the group consisting of -H, -OH, -CH₃, -NH₂, -CH₂OH and -C₆H₉(OH)₂;
Y¹, Y² are selected, the same or independently from the other, from the group consisting of -H, -CH₃, -NC₄H₆O, -CONH₂, -COOH, -COO-, C₆H₁₀SO₂O⁻ and -C₆H₁₀SO₂OH;
Z is an optional element selected from the group consisting of -O-, -CH₂-, -CO- and methyl cellulose;
c) mixing the solution of the metal ion component obtained from step a) and the polymer component from step b), thereby forming a dispersion of the metal ion component and the polymer component;
d) drying the dispersion comprising the metal ion component and the polymer component obtained from step c); and
e) dispersing the metal ion component and the polymer component obtained from step d) in water to form the aqueous polymer electrolyte.

10. The method according to claim 9, wherein in step a) the metal salt is selected from the group consisting of LiOH, NaOH, LiCO₃ and NaCO₃.

11. The method according to claim 9 or 10, wherein in step b) a dispersion of the polymer and water is formed, wherein the weight ratio of water to polymer is in a range from ≥ 1:10 to ≤ 500: 1, preferably in a range from ≥ 1:1 to ≤ 100:1, and more preferably in a range from ≥ 2:1 to ≤ 50:1.

12. The method according to any one of claims 9 to 11, wherein in step d) the dispersion is dried under vacuum conditions at a temperature in a range of ≥ 20 °C to ≤ 120 °C, preferably under vacuum in a range of ≥ 1x10⁻³ mbar to ≤ 1x10⁻² mbar and at a temperature in a range of ≥ 60 °C to ≤ 80 °C.

13. An aqueous polymer electrolyte obtained by the method according to any one of claims 9 to 12.

14. An energy storage device, comprising a positive electrode, a negative electrode, and an electrolyte disposed between the positive electrode and the negative electrode, wherein the electrolyte is an aqueous polymer electrolyte according to any one of claims 1 to 8 or 13, particularly a lithium-ion battery, a lithium-ion capacitor or a supercapacitor.

15. Use of the aqueous polymer electrolyte according to any one of claims 1 to 8 or 13 as electrolyte for energy storage devices.
